# EUROPEAN PATENT APPLICATION

(11) **EP 4 755 777 A1**
(43) Date of publication of application: **10.06.2026**
(21) Application number: 24897078.2
(22) Date of filing: 01.10.2024
(51) Int. Cl.: B62M 6/60, B62M 11/16

(54) **UNIT**

(30) Priority: 29.11.2023 JP 2023201653
(71) Applicant: Jatco Ltd., Shizuoka 417-8585 (JP)
(72) Inventor: YAMASHITA, Katsunori, Fuji-shi, Shizuoka 417-8585 (JP); HINUMA, Syunsuke, Fuji-shi, Shizuoka 417-8585 (JP); MATSUSHITA, Hiroyuki, Fuji-shi, Shizuoka 417-8585 (JP); UEHARA, Hiroki, Fuji-shi, Shizuoka 417-8585 (JP)
(74) Representative: Hoefer & Partner Patentanwälte mbB
(86) International application number: PCT/JP2024/035125
(87) International publication number: WO 2025/115388

(57) **Abstract**

[Problems] To downsize the unit that has the fixed shaft at the center and outputs the motive force from the hub at the outermost circumference.

[Solutions] The unit includes: a fixed shaft; a speed reduction mechanism having a portion positioned at an outer circumference of the fixed shaft; a transmission mechanism having a portion positioned at the outer circumference of the fixed shaft; a motor having a portion positioned at the outer circumference of the fixed shaft; and a hub having a portion positioned at an outer circumference of the motor, wherein the motor is connected to the hub via the speed reduction mechanism, the transmission mechanism is connected to the hub by bypassing the speed reduction mechanism, and when viewed from the radial direction, the transmission mechanism has a portion overlapping with the motor.

## Description

### TECHNICAL FIELD

The present invention relates to a unit.

### BACKGROUND ART

Patent Documents 1 to 3 disclose drive units for an electrically assisted bicycle that have a motor and a planetary gear speed reduction mechanism. These drive units have a fixed shaft at the center and output motive force from a hub at an outermost circumference.

### PRIOR ART DOCUMENT

### PATENT DOCUMENT

Patent Document 1: JP 2005-335535 A
Patent Document 2: JP 2012-121337 A
Patent Document 3: WO 2018/001021 A1

### SUMMARY OF INVENTION

### PROBLEMS TO BE SOLVED BY THE INVENTION

An object of the present invention is to downsize a unit that has a fixed shaft at the center and outputs motive force from a hub at an outermost circumference.

### MEANS FOR SOLVING THE PROBLEM

In one aspect of the present invention, a unit includes: a fixed shaft; a speed reduction mechanism having a portion positioned at an outer circumference of the fixed shaft; a transmission mechanism having a portion positioned at the outer circumference of the fixed shaft; a motor having a portion positioned at the outer circumference of the fixed shaft; and a hub having a portion positioned at an outer circumference of the motor, wherein the motor is connected to the hub via the speed reduction mechanism, the transmission mechanism is connected to the hub by bypassing the speed reduction mechanism, and when viewed from the radial direction, the transmission mechanism has a portion overlapping with the motor.

### EFFECT OF THE INVENTION

According to one aspect of the present invention, a transmission mechanism, to which motive force of a motor is not directly transmitted and thus is independent in terms of motive force transmission, is caused to overlap in the radial direction of the motor, and thereby, it is possible to downsize in the axial direction a unit that has a fixed shaft at the center and outputs the motive force from a hub at an outermost circumference.

### BRIEF DESCRIPTION OF DRAWINGS

[FIG. 1] FIG. 1 is a configuration diagram for explaining an overview of an electrically assisted bicycle to which a unit according to an embodiment of the present invention is applied.
[FIG. 2] FIG. 2 is a sectional view of the unit.
[FIG. 3] FIG. 3 is a collinear chart of a speed reduction mechanism.
[FIG. 4] FIG. 4 is a sectional view of the unit according to a first comparative example.
[FIG. 5] FIG. 5 is a sectional view of the unit according to a second comparative example.
[FIG. 6A] FIG. 6A is a skeleton diagram of a transmission mechanism in the unit and is a diagram showing a state in which the transmission mechanism is switched to a first speed.
[FIG. 6B] FIG. 6B is a collinear chart of the transmission mechanism in the unit and is a diagram showing a state in which the transmission mechanism is switched to the first speed.
[FIG. 7] FIG. 7 is a skeleton diagram of the transmission mechanism in the unit and is a diagram showing a state in which the transmission mechanism is switched to a second speed.
[FIG. 8A] FIG. 8A is a skeleton diagram of the transmission mechanism in the unit and is a diagram showing a state in which the transmission mechanism is switched to a third speed.
[FIG. 8B] FIG. 8B is a collinear chart of the transmission mechanism in the unit and is a diagram showing a state in which the transmission mechanism is switched to the third speed.
[FIG. 9] FIG. 9 is a conceptual diagram for explaining a cam.

### DESCRIPTION OF EMBODIMENTS

First, definitions of terms in this specification are as follows.

A "unit" is also referred to as a motor unit (a unit having at least a motor), a motive force transmission device (a device having at least a motive force transmission mechanism (for example, a gear mechanism and/or a differential gear mechanism, or the like)), or the like. A device (unit) having a motor and a motive force transmission mechanism belongs to concepts of both the motor unit and the motive force transmission device.

A "motor" is a rotating electric machine having an electric motor function and/or a power generator function.

The phrases "an element B (component, part, or the like) connected to an element A (component, part, or the like)", "an element B (component, part, or the like) connected at the downstream side of an element A (component, part, or the like)", and "an element B (component, part, or the like) connected upstream of an element A (component, part, or the like)" mean that the element A and the element B are connected so as to be capable of transmitting that motive force, and the input side of the motive force is the upstream side, and the output side of the motive force is the downstream side. The element A and the element B may be connected via other components, parts, or the like (for example, other clutches, other gear mechanisms, or the like).

The phrase "overlap when viewed in a predetermined direction" means that a plurality of elements are arranged in the predetermined direction (for example, the axial direction, the radial direction, the gravitational direction, the vehicle traveling direction (the vehicle forward direction, the vehicle backward direction), or the like), and is synonymous with a case in which it is described as "overlap in the predetermined direction". When a plurality of elements (components, parts, or the like) are illustrated as being arranged in the predetermined direction in the drawings, it may be considered that there is a sentence explaining that the elements are overlapped when viewed in the predetermined direction in the description of the specification.

The phrases "do not overlap when viewed in a predetermined direction" and "are offset when viewed in the predetermined direction" mean that a plurality of elements are not arranged in the predetermined direction (for example, the axial direction, the radial direction, the gravitational direction, the vehicle traveling direction (the vehicle forward direction, the vehicle backward direction), or the like), and are synonymous with cases in which it is described as "do not overlap in the predetermined direction" and "are offset in the predetermined direction". When a plurality of elements (components, parts, or the like) are illustrated as not being arranged in the predetermined direction in the drawings, it may be considered that there is a sentence explaining that the elements do not overlap when viewed in the predetermined direction in the description of the specification.

"An element A (component, part, or the like) is positioned between an element B (component, part, or the like) and an element C (component, part, or the like) when viewed in a predetermined direction" means that when observed from the predetermined direction (for example, the axial direction, the radial direction, the gravitational direction, or the like), it can be observed that the element A is positioned between the element B and the element C. For example, when the element B, the element A, and the element C are arranged in this order along the axial direction, it can be said that the element A is positioned between the element B and the element C when viewed in the radial direction. When the element A is illustrated as being positioned between the element B and the element C when viewed in the predetermined direction in the drawings, it may be considered that there is a sentence explaining that the element A is positioned between the element B and the element C when viewed in the predetermined direction in the description of the specification.

The "axial direction" means the axial direction of a rotation shaft of components constituting the unit. The components include, for example, a motor, a speed reduction mechanism, a transmission mechanism, or the like.

Hereinafter, with reference to the drawings, an electric assist unit 100 serving as the unit according to an embodiment of the present invention and an electrically assisted bicycle (hereinafter, simply referred to as a "bicycle") 1 serving as a vehicle to which the electric assist unit 100 is applied will be described.

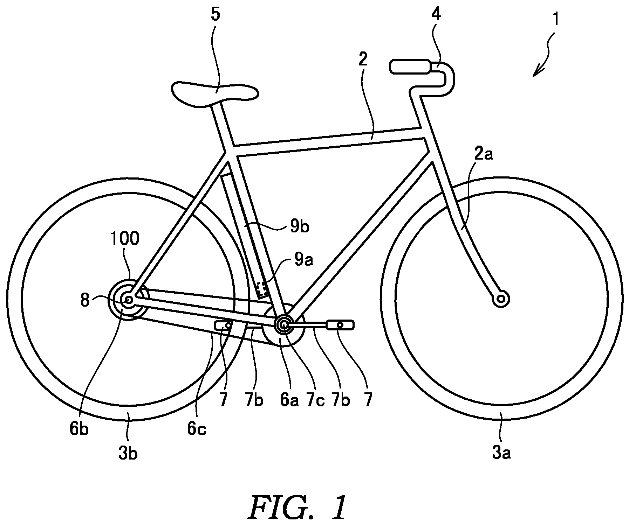

First, an overall configuration of the bicycle 1 will be described with reference to FIG. 1.

FIG. 1 is a configuration diagram for explaining an overview of the bicycle 1 to which the electric assist unit 100 is applied.

As shown in FIG. 1, the bicycle 1 includes a frame 2, a front wheel 3a, a rear wheel 3b serving as a drive wheel, a handle 4, a saddle 5, a drive sprocket 6a, a driven sprocket 6b, a chain 6c, a pair of pedals 7, a pair of crank arms 7b serving as crank portions, a crankshaft 7c, a support shaft 8 serving as a fixed shaft, a controller 9a, a power storage unit 9b, and the electric assist unit 100.

The bicycle 1 is driven by a driver who straddles the bicycle 1, sits on the saddle 5, and pedals the crank arms 7b via the pedals 7. In the bicycle 1, the rear wheel 3b is driven by a pedaling force (driving torque) transmitted from the crank arms 7b to the crankshaft 7c and a driving force (assist torque) exerted by the electric assist unit 100 having a magnitude according to the pedaling force.

The frame 2 is a so-called diamond-type frame having a substantially parallelogram shape in a side view. The front wheel 3a and the rear wheel 3b are rotatably attached to the frame 2. The frame 2 has a front fork 2a that supports the front wheel 3a.

The front wheel 3a is steered left and right by the front fork 2a which is rotated by an operation of the handle 4 by the driver.

The rear wheel 3b rotates about the support shaft 8. The driven sprocket 6b and the electric assist unit 100 are attached to the rear wheel 3b.

The driving torque is transmitted to the driven sprocket 6b via the chain 6c suspended between the driven sprocket 6b and the drive sprocket 6a to which the driving force from the crank arms 7b is input.

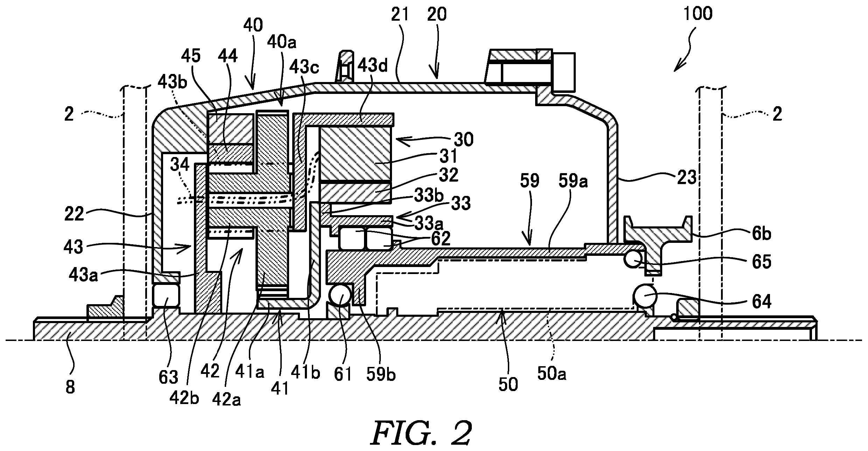

The electric assist unit 100 generates the assist torque that assists the pedaling force applied by the driver. The electric assist unit 100 will be described in detail later with reference to FIGs. 2 to 5.

The pedals 7 are for the driver to input a driving torque. The pedals 7 are connected to the crankshaft 7c via the crank arms 7b.

The support shaft 8 is attached to the frame 2. The support shaft 8 is provided so as to be non-rotatable with respect to the frame 2.

The controller 9a is configured with a microcomputer including a CPU, a RAM, a ROM, an input/output interface, and the like. The controller 9a can be configured with a plurality of microcomputers. The controller 9a performs various types of processing by the CPU reading out and executing a program stored in the ROM. Specifically, the controller 9a calculates the assist torque based on an electrical signal corresponding to the magnitude of the pedaling force input from the torque sensor (not shown), which will be described later, and outputs a command signal so that a motor 30 generates the assist torque.

The power storage unit 9b is a rechargeable secondary battery such as a nickel-metal hydride storage battery, a lithium-ion storage battery, or the like. The power storage unit 9b is provided so as to be removable from the frame 2.

Next, a configuration of the electric assist unit 100 will be described with reference to FIGs. 2 to 5.

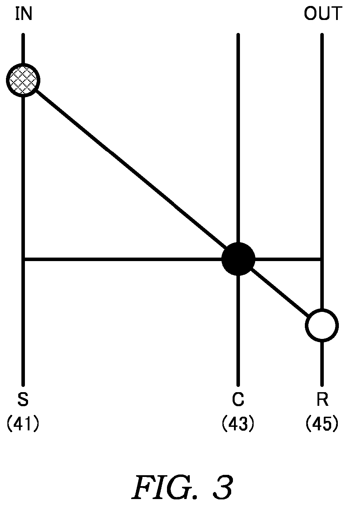

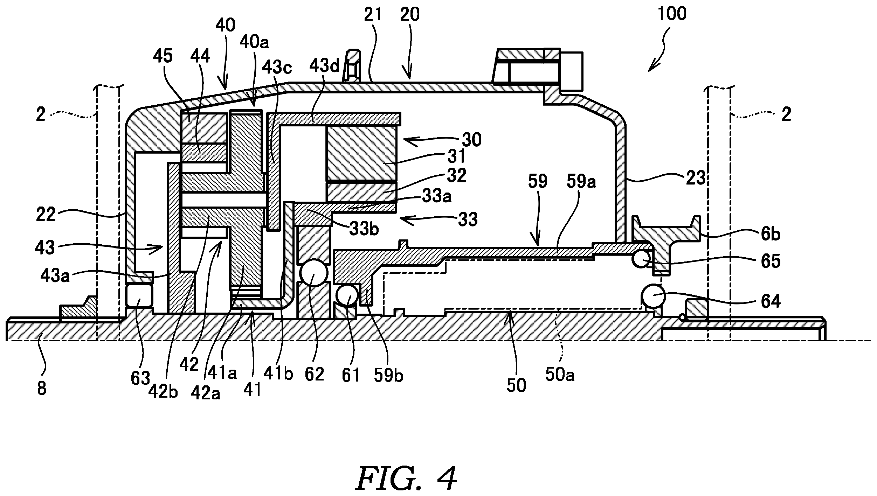

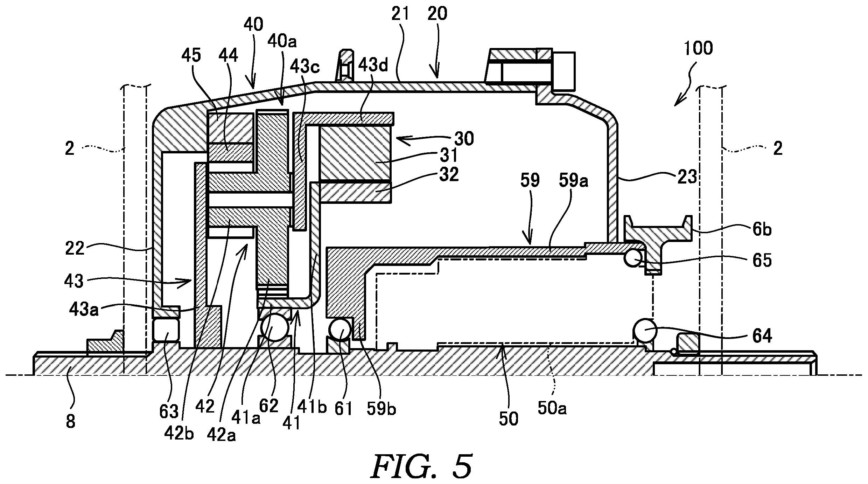

FIG. 2 is a sectional view of the electric assist unit 100. FIG. 3 is a collinear chart of a speed reduction mechanism 40. FIG. 4 is a sectional view of the electric assist unit 100 according to a first comparative example. FIG. 5 is a sectional view of the electric assist unit 100 according to a second comparative example. FIGs. 2, 4, and 5 show only an upper portion above the central axis (the support shaft 8) of the electric assist unit 100, which is a rotating body rotating about the central axis.

As shown in FIG. 2, the electric assist unit 100 includes the support shaft 8, a case 20 serving as a hub, the motor 30, a torque sensor (not shown), the speed reduction mechanism 40, a transmission mechanism 50, a bearing 61 serving as a first bearing, and a bearing 62 serving as a second bearing. The electric assist unit 100 can shift gear stages among three stages of a first gear stage (a lowest gear stage), a second gear stage, and a third gear stage (a highest gear stage) by the transmission mechanism 50.

The case 20 supports the rear wheel 3b rotatably with respect to the support shaft 8. The case 20 transmits at least one of a pedaling force or a driving force to the rear wheel 3b. The case 20 rotates together with the rear wheel 3b about the support shaft 8. The case 20 has an outer circumferential portion 21 and a pair of side wall portions 22 and 23. The case 20 is provided by being divided into two portions in the axial direction, a portion where the side wall portion 22 is provided and a portion where the side wall portion 23 is provided, and both portions are integrally fixed by bolt fastening.

The outer circumferential portion 21 is provided in a substantially cylindrical shape. The outer circumferential portion 21 covers at least parts of outer circumferences of the motor 30, the speed reduction mechanism 40, and the transmission mechanism 50. The outer circumferential portion 21 has a portion that is positioned at an outer circumference of the motor 30. The rear wheel 3b is attached to the outer circumferential portion 21 via spokes (not shown).

The side wall portion 22 is provided at one end portion of the outer circumferential portion 21 in the axial direction. The side wall portion 22 is provided in an annular plate shape and closes one opening end portion of the outer circumferential portion 21. The side wall portion 22 is rotatably supported by the support shaft 8 via a bearing 63. In other words, the side wall portion 22 is rotatably supported with respect to the support shaft 8.

The side wall portion 23 is provided at the other end portion of the outer circumferential portion 21 in the axial direction. The side wall portion 23 is provided in an annular plate shape and closes the other opening end portion of the outer circumferential portion 21. The side wall portion 23 is connected at the downstream side of a motive force transmission member 59 of the transmission mechanism 50, which will be described later. The side wall portion 23 rotates about the support shaft 8 integrally with the motive force transmission member 59.

The motor 30 assists the driving force according to the pedaling force exerted by the driver. The motor 30 is driven by the command from the controller 9a (see FIG. 1). The motor 30 generates the assist torque by electric power supplied from the power storage unit 9b (see FIG. 1).

The motor 30 is connected to the case 20 via the speed reduction mechanism 40. The motor 30 has a stator 31, a rotor 32, a support member 33, and wiring 34.

The stator 31 is supported non-rotatably with respect to the support shaft 8 by a carrier 43 of the speed reduction mechanism 40.

The rotor 32 is provided on an inner circumferential side of the stator 31 and rotates with respect to the stator 31. A sun gear 41 of the speed reduction mechanism 40, which will be described later, is attached to the rotor 32 via the support member 33. The rotor 32 rotates together with the sun gear 41.

The support member 33 has a support portion 33a and a motive force transmission portion 33b.

The support portion 33a is formed in a substantially cylindrical shape so as to extend in the axial direction. The support portion 33a is rotatably supported on an outer circumference of the motive force transmission member 59 of the transmission mechanism 50 via a pair of bearings 62.

The motive force transmission portion 33b is formed in an annular plate shape so as to extend in the radial direction. The motive force transmission portion 33b is provided integrally with the support portion 33a at one end portion of the support portion 33a in the axial direction. An outer circumferential surface of the motive force transmission portion 33b is fixed to the rotor 32 of the motor 30. One end surface of the motive force transmission portion 33b in the axial direction is fixed to the sun gear 41 of the speed reduction mechanism 40.

The wiring 34 electrically connects the controller 9a and the stator 31, and enables execution of the control of the motor 30 by the controller 9a. The wiring 34 connects the power storage unit 9b and the stator 31, and achieves supply of the electric power from the power storage unit 9b to the stator 31. The wiring 34 is configured so as to pass through the inside of the carrier 43 of the speed reduction mechanism 40, which will be described later.

With such a configuration, the wiring 34 is allowed to be taken out to the outside by a method such as providing a hollow shaft in the carrier 43 or forming a through hole in a part of the carrier 43. In this case, since a planetary speed reduction mechanism 40a, in which the carrier 43 is fixed, is provided and the carrier 43 does not rotate, it is possible to provide wiring routing such that the wiring 34 is not caught in rotation.

The motor 30 has a portion that is positioned at an outer circumference of the support shaft 8. The motor 30 is disposed so as to be sandwiched between the motive force transmission member 59 of the transmission mechanism 50, which will be described later, and the case 20 in the radial direction. With such a configuration, the present configuration is suitable in contrast to a case in which if a partition wall is provided in the axial direction between the motor 30 and a planetary gear mechanism 50a of the transmission mechanism 50, which will be described later, the size of the electric assist unit 100 would be increased in the axial direction.

The torque sensor detects the driving torque generated by the driver pedaling the crank arms 7b via the pedals 7 and transmitted to the crankshaft 7c. The torque sensor is, for example, a non-contact torque sensor that detects a torque based on a torsion of the crankshaft 7c measured magnetically.

The speed reduction mechanism 40 has the planetary speed reduction mechanism 40a and a one-way clutch 45. In other words, the speed reduction mechanism 40 is configured to include the planetary speed reduction mechanism 40a. The planetary speed reduction mechanism 40a has the sun gear 41, planetary gears 42, the carrier 43, and a ring gear 44.

As shown in FIG. 3, in the speed reduction mechanism 40, the carrier 43 of the planetary speed reduction mechanism 40a is fixed, and the assist force input from the motor 30 via the sun gear 41 is reduced in speed and output from the ring gear 44.

As shown in FIG. 2, the sun gear 41 is attached to the rotor 32 of the motor 30 via the support member 33. The sun gear 41 has a gear portion 41a and a motive force transmission portion 41b.

The gear portion 41a is formed in a substantially cylindrical shape so as to extend in the axial direction. The gear portion 41a is opposed to the outer circumference of the support shaft 8 with a space therebetween so as to surround the outer circumference of the support shaft 8. A tooth surface that meshes with the planetary gears 42 is formed on an outer circumference of the gear portion 41a.

The motive force transmission portion 41b is formed in an annular plate shape so as to extend in the radial direction. One end of the motive force transmission portion 41b is fixed to one end portion of the gear portion 41a in the axial direction. The other end of the motive force transmission portion 41b is fixed to the support member 33 of the motor 30.

The planetary gears 42 are supported by the carrier 43. The planetary gears 42 rotate about the central axis. Because the carrier 43 is fixed so as not to be rotatable as described later, the planetary gears 42 do not revolve around an outer circumference of the sun gear 41.

The planetary gears 42 each has a large-diameter portion 42a that meshes with the sun gear 41 and a small-diameter portion 42b that meshes with the ring gear 44.

The large-diameter portion 42a is formed in a substantially cylindrical shape. A tooth surface that meshes with the sun gear 41 is formed on an outer circumference of the large-diameter portion 42a.

The small-diameter portion 42b is provided coaxially with the large-diameter portion 42a. The small-diameter portion 42b is formed in a substantially cylindrical shape having a smaller diameter than the large-diameter portion 42a. A tooth surface that meshes with the ring gear 44 is formed on an outer circumference of the small-diameter portion 42b. In other words, a plurality of tooth surfaces are provided coaxially with each other and constitute the planetary gear 42.

The carrier 43 has a fixed portion 43a, connecting portions 43b, an extending portion 43c, and a support portion 43d.

The fixed portion 43a is formed in an annular plate shape so as to extend in the radial direction. The fixed portion 43a is fixed to the outer circumference of the support shaft 8. In other words, the carrier 43 is fixed to the support shaft 8 so as not to be rotatable. The fixed portion 43a is provided so as to be adjacent to the small-diameter portion 42b of the planetary gear 42 in the axial direction. The fixed portion 43a supports the planetary gears 42 so that the planetary gears 42 can rotate.

The connecting portions 43b extend in the axial direction from a plurality of locations of the fixed portion 43a in the circumferential direction. The connecting portions 43b are disposed between the plurality of planetary gears 42 in the circumferential direction, in other words, at positions where the planetary gears 42 are not provided. The connecting portions 43b connect the fixed portion 43a and the extending portion 43c. The wiring 34 is configured so as to pass through the inside of the connecting portion 43b. Instead of this configuration, the wiring 34 may be fixed along an outer surface of the connecting portion 43b.

The extending portion 43c is formed in an annular plate shape so as to extend in the radial direction. The extending portion 43c is formed to have a larger diameter than the fixed portion 43a. The extending portion 43c is provided so as to be adjacent to the large-diameter portions 42a of the planetary gears 42 in the axial direction. The extending portion 43c supports the planetary gears 42 so that the planetary gears 42 can rotate. In other words, the extending portion 43c rotatably supports the planetary gears 42 between the extending portion 43c and the fixed portion 43a.

The support portion 43d is formed in a substantially cylindrical shape so as to extend in the axial direction from an end portion of the extending portion 43c in the radial direction. The stator 31 of the motor 30 is attached to an inner circumference of the support portion 43d. In other words, the stator 31 of the motor 30 is supported by the carrier 43. With such a configuration, the stator 31 is provided non-rotatably with respect to the support shaft 8 via the carrier 43.

With such a configuration, because the planetary speed reduction mechanism 40a, in which the carrier 43 is fixed, is provided, it is possible to provide the carrier 43 with a function of fixing the stator 31, and so, a separate member or the like for fixing the stator 31 can be omitted, which can contribute to downsizing of the electric assist unit 100.

The ring gear 44 is provided on the outer circumference of the small-diameter portion 42b of the planetary gear 42. An outer circumference of the ring gear 44 is attached to the one-way clutch 45. A tooth surface that meshes with the tooth surface of the small-diameter portion 42b is formed on an inner circumference of the ring gear 44.

The one-way clutch 45 is provided between the outer circumference of the ring gear 44 and an inner surface of the side wall portion 22 in the case 20. The one-way clutch 45 switches between a state in which the assist force of the motor 30 is transmitted to the case 20 via the speed reduction mechanism 40 and a state in which the rotation of the case 20 is not transmitted to the motor 30.

The speed reduction mechanism 40 has a portion that is positioned at the outer circumference of the support shaft 8. The speed reduction mechanism 40 has a portion that overlaps with the transmission mechanism 50 when viewed from the axial direction. With such a configuration, even when the radial length of the speed reduction mechanism 40 is increased when attempting to set a speed reduction ratio of the speed reduction mechanism 40 larger, it is possible to provide the electric assist unit 100 that can be downsized in the radial direction by arranging the speed reduction mechanism 40 by utilizing a space, the dimension of which in the radial direction can be made larger on a side of the transmission mechanism 50 in the axial direction.

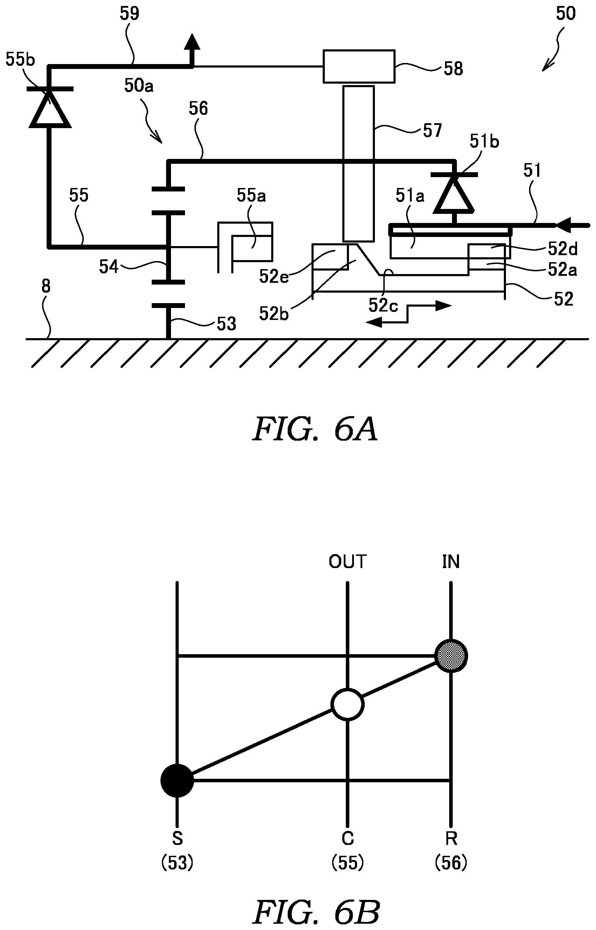

The transmission mechanism 50 has the planetary gear mechanism 50a serving as the gear portion and the motive force transmission member 59 serving as an output wall. The planetary gear mechanism 50a will be described in detail later with reference to FIGs. 6A to 9.

The motive force transmission member 59 is connected at the downstream side of the planetary gear mechanism 50a. The motive force transmission member 59 functions as the partition wall that partitions a transmission mechanism 50 chamber and a motor 30 chamber in the case 20.

The bearing 61 is disposed between the motive force transmission member 59 and the support shaft 8. The bearing 62 is disposed between the motive force transmission member 59 and the motor 30. With such a configuration, the motor 30 is supported by the support shaft 8 via the bearing 61, the motive force transmission member 59, and the bearing 62.

If an attempt is made to directly support the motor 30 by the support shaft 8 only with the bearing 61 on the side of the transmission mechanism 50, the size of the electric assist unit 100 would be increased in the axial direction or the size of the electric assist unit 100 would be increased in the radial direction. Specifically, as in the first comparative example shown in FIG. 4, when the bearing 62 is provided so as to be arranged in the axial direction with the bearing 61, the size of the electric assist unit 100 is increased in the axial direction by the size of the bearing 62. In addition, as in a second comparative example shown in FIG. 5, when the bearing 62 is provided so as to support the sun gear 41 with respect to the support shaft 8, it is necessary to move the planetary speed reduction mechanism 40a toward the outer circumference in the radial direction by the size of the bearing 62, and so, the size of the electric assist unit 100 is increased in the radial direction.

Furthermore, if an attempt is made to directly support the motor 30 by the support shaft 8 only with the bearing 61, the support stability of the motor 30 is deteriorated compared with the aspect of the present invention. Therefore, the aspect of the present invention can be said to be a suitable support aspect.

In addition, if a partition wall that separates the entire transmission mechanism 50 and the entire motor 30 is separately provided in order to improve a sealing performance of the transmission mechanism 50 chamber and the motor 30 chamber in the case 20, although the size of the electric assist unit 100 is increased by an amount of the partition wall, since the present configuration provides the motive force transmission member 59 with a function of the partition wall, it is possible to contribute to the downsizing.

The transmission mechanism 50 has a portion that is positioned at the outer circumference of the support shaft 8. When viewed from the radial direction, the transmission mechanism 50 has a portion that overlaps with the motor 30. In such a configuration, the transmission mechanism 50, to which the motive force of the motor 30 is not directly transmitted and thus is independent in terms of motive force transmission, is caused to overlap in the radial direction of the motor 30, and thereby, it is possible to downsize, in the axial direction, the electric assist unit 100 that has the support shaft 8 at the center and outputs the motive force from the case 20 at the outermost circumference.

Furthermore, when viewed from the radial direction, the planetary gear mechanism 50a has a portion that overlaps with the motor 30. With such a configuration, although downsizing is possible if the motive force transmission member 59, which is a part of the transmission mechanism 50, at least overlaps with the motor 30 in the radial direction, if the planetary gear mechanism 50a overlaps with the motor 30 in the radial direction, further downsizing in the axial direction becomes possible.

Next, the transmission mechanism 50 will be described with reference to FIGs. 6A to 9.

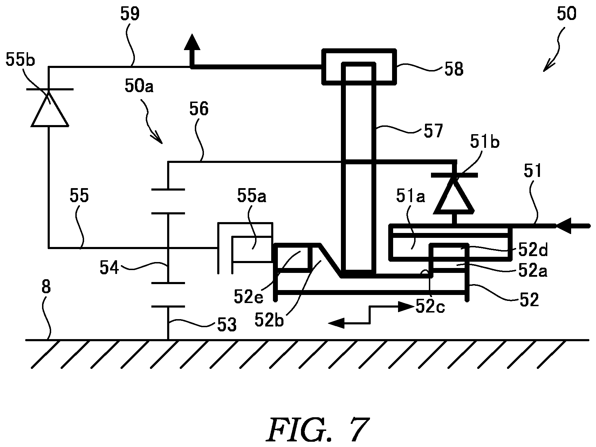

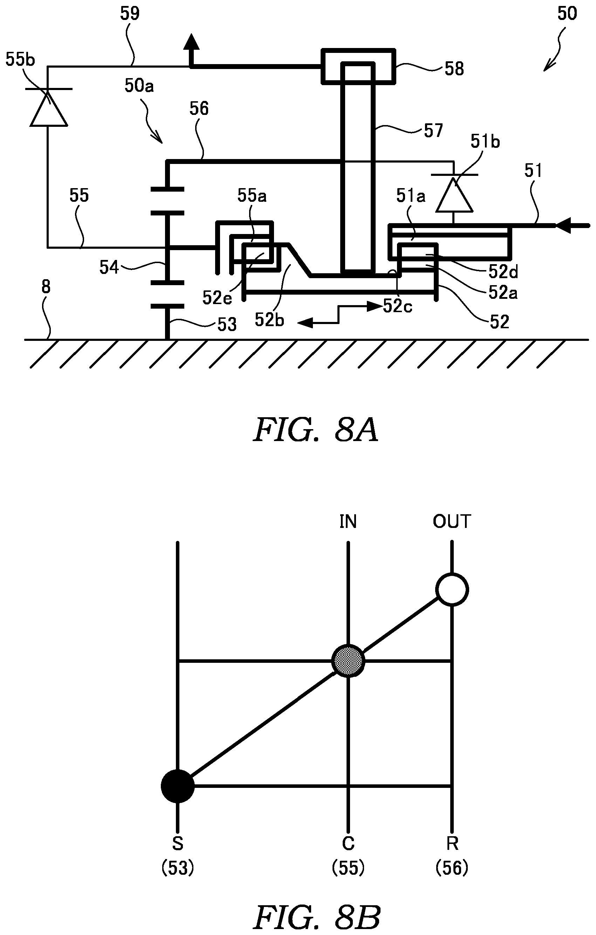

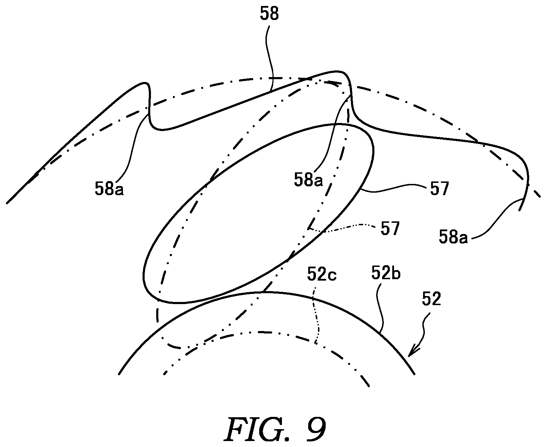

FIG. 6A is a skeleton diagram of the transmission mechanism 50 in the electric assist unit 100 and is a diagram showing a state in which the transmission mechanism 50 is shifted to the first gear stage. FIG. 6B is a collinear chart of the transmission mechanism 50 in the electric assist unit 100 and is a diagram showing a state in which the transmission mechanism 50 is shifted to the first gear stage. FIG. 7 is a skeleton diagram of the transmission mechanism 50 in the electric assist unit 100 and is a diagram showing a state in which the transmission mechanism 50 is shifted to the second gear stage. FIG. 8A is a skeleton diagram of the transmission mechanism 50 in the electric assist unit 100 and is a diagram showing a state in which the transmission mechanism 50 is shifted to the third gear stage. FIG. 8B is a collinear chart of the transmission mechanism 50 in the electric assist unit 100 and is a diagram showing a state in which the transmission mechanism 50 is shifted to the third gear stage. FIG. 9 is a conceptual diagram for explaining a cam 57.

First, a configuration of the transmission mechanism 50 will be described mainly with reference to FIG. 6A.

As shown in FIG. 6A, the transmission mechanism 50 has the planetary gear mechanism 50a, a motive force input member 51, a transmission shaft 52, the cam 57, an engagement member 58, and the motive force transmission member 59. The transmission mechanism 50 is connected to the case 20 by bypassing the speed reduction mechanism 40. The planetary gear mechanism 50a has a sun gear 53, planetary gears 54, a carrier 55, and a ring gear 56.

Motive force other than the motive force from the motor 30 (for example, motive force exerted by human power or the like) is input from the motive force input member 51. Here, the driving torque generated by the driver pedaling the crank arms 7b via the pedals 7 is transmitted and input from the motive force input member 51 via the drive sprocket 6a, the chain 6c, and the driven sprocket 6b. The motive force input member 51 is connected to the ring gear 56 via a one-way clutch 51b. The motive force input member 51 has a meshing portion 51a.

The meshing portion 51a is provided on an inner circumference of the motive force input member 51. The meshing portion 51a is formed to be elongated in the axial direction. The meshing portion 51a meshes with the transmission shaft 52 and transmits the motive force.

The one-way clutch 51b switches between a state in which the driving torque input to the motive force input member 51 is transmitted to the ring gear 56 and a state in which the rotation of the ring gear 56 is not transmitted to the motive force input member 51.

The transmission shaft 52 is movable in the axial direction on the outer circumference of the support shaft 8, and shifts the gear stages among three stages of the first gear stage, the second gear stage, and the third gear stage depending on the position in the axial direction. The position in the axial direction of the transmission shaft 52 is changed based on an operation by the driver. Thereby, for example, it is possible to change the gear stage by an operation of a lever or the like at hand by the driver, similar to gear shifting of a normal bicycle. The transmission shaft 52 has a first large-diameter portion 52a, a second large-diameter portion 52b, and a small-diameter portion 52c.

The first large-diameter portion 52a is provided on an outer circumference of the transmission shaft 52. The first large-diameter portion 52a has a first meshing portion 52d that meshes with the meshing portion 51a of the motive force input member 51.

The first meshing portion 52d is provided on an outer circumference of the first large-diameter portion 52a. The first meshing portion 52d is formed to be shorter than the meshing portion 51a of the motive force input member 51 in the axial direction. The first meshing portion 52d meshes with the meshing portion 51a of the motive force input member 51 at all gear stages. In other words, the motive force is transmitted from the motive force input member 51 to the transmission shaft 52 at all gear stages.

The second large-diameter portion 52b is provided on the outer circumference of the transmission shaft 52. The second large-diameter portion 52b is provided so as to be spaced apart from the first large-diameter portion 52a in the axial direction. The second large-diameter portion 52b has a second meshing portion 52e that can mesh with a meshing portion 55a of the carrier 55, which will be described later.

The second meshing portion 52e is provided on an outer circumference of the second large-diameter portion 52b. The second meshing portion 52e is formed to have the same outer diameter as the first meshing portion 52d. The second meshing portion 52e meshes with the meshing portion 55a of the carrier 55, which will be described later, when the gear stage is shifted to the third gear stage.

The small-diameter portion 52c is provided between the first large-diameter portion 52a and the second large-diameter portion 52b in the axial direction. The small-diameter portion 52c is formed to have a smaller diameter than the first large-diameter portion 52a and the second large-diameter portion 52b.

The planetary gear mechanism 50a is rotatably supported with respect to the support shaft 8 via a bearing 64 (see FIG. 2). The planetary gear mechanism 50a rotatably supports the motive force transmission member 59 via a bearing 65 (see FIG. 2).

The sun gear 53 is fixed to the outer circumference of the support shaft 8. In other words, the sun gear 53 does not rotate.

The plurality of the planetary gears 54 are provided and are supported by the carrier 55. The planetary gears 54 are provided on an outer circumference of the sun gear 53 and mesh with the sun gear 53. The planetary gears 54 are provided on an inner circumference of the ring gear 56 and mesh with the ring gear 56. The planetary gears 54 rotate about the central axis and revolve around the outer circumference of the sun gear 53.

The carrier 55 rotates about the support shaft 8 with revolution of the planetary gears 54. The carrier 55 has the meshing portion 55a. The carrier 55 is connected to the motive force transmission member 59 via a one-way clutch 55b.

The meshing portion 55a meshes with the second meshing portion 52e when the transmission shaft 52 is moved in the axial direction and the gear stage is shifted to the third gear stage (the state shown in FIG. 8A).

The one-way clutch 55b switches between a state in which the motive force output from the carrier 55 is transmitted to the motive force transmission member 59 and a state in which the rotation of the motive force transmission member 59 is not transmitted to the carrier 55.

The ring gear 56 is provided on an outer circumference of the planetary gears 54 and meshes with the planetary gears 54. The ring gear 56 is connected to the motive force input member 51 via the one-way clutch 51b. A rotation shaft of the cam 57 is inserted through the ring gear 56.

As shown in FIG. 9, a plurality of the cams 57 are provided on an outer circumference of the transmission shaft 52. The cams 57 revolve around an outer circumference of the transmission shaft 52 with rotation of the ring gear 56. Each cam 57 has a different angle depending on whether the second large-diameter portion 52b is positioned on the inner circumference or the small-diameter portion 52c is positioned on the inner circumference.

When the second large-diameter portion 52b is positioned on the inner circumference, the cam 57 does not mesh with the engagement member 58 on the outer circumference and idles (the state shown by a solid line in FIG. 9). On the other hand, when the small-diameter portion 52c is positioned on the inner circumference, the cam 57 meshes with an engagement portion 58a of the engagement member 58 on the outer circumference and rotates integrally (the state shown by a two-dot chain line in FIG. 9).

As shown in FIG. 6A, the engagement member 58 is connected to the motive force transmission member 59. In a state in which the engagement member 58 is meshed with the cam 57, the motive force is transmitted from the motive force input member 51 to the engagement member 58 via the cam 57.

Next, each gear stage of the transmission mechanism 50 will be described with reference to FIGs. 6A to 8B. In FIGs. 6A, 7, and 8A, a motive force transmission path through which the motive force is transmitted is shown by thick lines.

As shown in FIG. 6A, in a state in which the gear stage of the transmission mechanism 50 is shifted to the first gear stage, the transmission shaft 52 is positioned at a first position in the axial direction.

The transmission shaft 52 is meshing with the meshing portion 51a of the motive force input member 51, but is not meshing with the meshing portion 55a of the carrier 55. In addition, in the transmission shaft 52, the second large-diameter portion 52b is in contact with the cam 57.

Therefore, the motive force that is input from the motive force input member 51 is transmitted to the ring gear 56 via the one-way clutch 51b. The motive force transmitted to the ring gear 56 is transmitted to the planetary gears 54 and is output as rotation of the carrier 55. The rotation of the carrier 55 is transmitted to the motive force transmission member 59 via the one-way clutch 55b.

With such a configuration, as shown in FIG. 6B, since the sun gear 53 is fixed, the transmission mechanism 50 reduces a speed of the motive force that is input from the motive force input member 51 via the ring gear 56, and outputs the motive force from the carrier 55.

As shown in FIG. 7, in a state in which the gear stage of the transmission mechanism 50 is shifted to the second gear stage, the transmission shaft 52 is positioned at a second position in the axial direction.

The transmission shaft 52 is meshing with the meshing portion 51a of the motive force input member 51, but is not meshing with the meshing portion 55a of the carrier 55. In addition, in the transmission shaft 52, the small-diameter portion 52c is in contact with the cam 57. Therefore, the cam 57 engages with the engagement member 58.

Therefore, the motive force that is input from the motive force input member 51 is transmitted to the cam 57 via the one-way clutch 51b. The motive force transmitted to the cam 57 is transmitted to the motive force transmission member 59 via the engagement member 58.

With such a configuration, the transmission mechanism 50 is in a state in which the motive force input member 51 and the ring gear 56 are directly connected, and outputs the motive force, which is input from the motive force input member 51, from the ring gear 56 at a constant speed.

As shown in FIG. 8A, in a state in which the gear stage of the transmission mechanism 50 is shifted to the third gear stage, the transmission shaft 52 is positioned at a third position in the axial direction.

The transmission shaft 52 is meshing with the meshing portion 51a of the motive force input member 51 and is also meshing with the meshing portion 55a of the carrier 55. In addition, in the transmission shaft 52, the small-diameter portion 52c is in contact with the cam 57. Therefore, the cam 57 engages with the engagement member 58.

Therefore, the motive force that is input from the motive force input member 51 is transmitted to the carrier 55 via the transmission shaft 52. The motive force transmitted to the carrier 55 is transmitted to the motive force transmission member 59 via the ring gear 56, the cam 57, and the engagement member 58.

With such a configuration, as shown in FIG. 8B, since the sun gear 53 is fixed, the transmission mechanism 50 increases the speed of the motive force that is input from the motive force input member 51 via the carrier 55, and outputs the motive force from the ring gear 56.

As described above, the transmission mechanism 50 can shift the gear stages among three stages of the first gear stage, the second gear stage, and the third gear stage. However, the configuration of the transmission mechanism 50 is merely one example, and other transmission mechanisms may also be provided. For example, a transmission mechanism in which the gear stage may be shifted not to three stages but to two stages or four or more stages may be provided.

The configuration and operational advantages of the above-mentioned embodiment of the present invention will be described collectively.
(1) The electric assist unit 100 includes; the support shaft 8; the speed reduction mechanism 40 having a portion positioned at the outer circumference of the support shaft 8; the transmission mechanism 50 having a portion positioned at the outer circumference of the support shaft 8; the motor 30 having a portion positioned at the outer circumference of the support shaft 8; and the case 20 having a portion positioned at the outer circumference of the motor 30, wherein the motor 30 is connected to the case 20 via the speed reduction mechanism 40, the transmission mechanism 50 is connected to the case 20 by bypassing the speed reduction mechanism 40, and when viewed from the radial direction, the transmission mechanism 50 has a portion overlapping with the motor 30.

According to this configuration, the transmission mechanism 50, to which the motive force of the motor 30 is not directly transmitted and thus is independent in terms of the motive force transmission, is caused to overlap in the radial direction of the motor 30, and thereby, it is possible to downsize, in the axial direction, the electric assist unit 100 that has the support shaft 8 at the center and outputs the motive force from the case 20 at the outermost circumference.

(2) When viewed from the axial direction, the speed reduction mechanism 40 has a portion overlapping with the transmission mechanism 50.

According to this configuration, even when the radial length of the speed reduction mechanism 40 is increased when attempting to set a reduction ratio of the speed reduction mechanism 40 larger, it is possible to provide the electric assist unit 100 that can be downsized in the radial direction by arranging the speed reduction mechanism 40 by utilizing a space the dimension of which in the radial direction can be made larger on a side of the transmission mechanism 50 in the axial direction.

(3) The transmission mechanism 50 has the planetary gear mechanism 50a and the motive force transmission member 59 connected at the downstream side of the planetary gear mechanism 50a, and in the radial direction, the motor 30 is disposed so as to be sandwiched between the motive force transmission member 59 and the case 20.

According to this configuration, the present configuration is suitable in contrast to a case in which if a partition wall is provided in the axial direction between the motor 30 and a planetary gear mechanism 50a of the transmission mechanism 50, the size of the electric assist unit 100 would be increased in the axial direction.

In addition, if a partition wall that separates the entire transmission mechanism 50 and the entire motor 30 is separately provided in order to improve a sealing performance of the transmission mechanism 50 chamber and the motor 30 chamber, although the size of the electric assist unit 100 would be increased by an amount of the partition wall, since the present configuration provides the motive force transmission member 59 with a function of the partition wall, it is possible to contribute to the downsizing.

(4) The transmission mechanism 50 has the planetary gear mechanism 50a and the motive force transmission member 59 connected at the downstream side of the planetary gear mechanism 50a, wherein the case 20 is connected at the downstream side of the motive force transmission member 59, and when viewed from the radial direction, the planetary gear mechanism 50a has a portion overlapping with the motor 30.

According to this configuration, although downsizing is possible if the motive force transmission member 59, which is a part of the transmission mechanism 50, at least overlaps with the motor 30 in the radial direction, if the planetary gear mechanism 50a overlaps with the motor 30 in the radial direction, further downsizing in the axial direction becomes possible.

(5) The electric assist unit 100 further includes the bearing 61 and the bearing 62, wherein the transmission mechanism 50 has the planetary gear mechanism 50a and the motive force transmission member 59 connected at the downstream side of the planetary gear mechanism 50a, the bearing 61 is disposed between the motive force transmission member 59 and the support shaft 8, and the bearing 62 is disposed between the motive force transmission member 59 and the motor 30.

In this configuration, the motor 30 is supported by the support shaft 8 via the bearing 61, the motive force transmission member 59, and the bearing 62. If an attempt is made to directly support the motor 30 by the support shaft 8 only with the bearing 61 on the side of the transmission mechanism 50, the size of the electric assist unit 100 would be increased in the axial direction or the size of the electric assist unit 100 would be increased in the radial direction. Furthermore, if an attempt is made to directly support the motor 30 by the support shaft 8 only with the bearing 61, the support stability of the motor 30 is deteriorated compared with the aspect of the present invention. Therefore, the aspect of the present invention can be said to be a suitable support aspect.

(6) The speed reduction mechanism 40 is configured to include the planetary speed reduction mechanism 40a, the carrier 43 of the planetary speed reduction mechanism 40a is fixed to the support shaft 8, and the stator 31 of the motor 30 is supported by the carrier 43.

According to this configuration, because the planetary speed reduction mechanism 40a, in which the carrier 43 is fixed, is provided, it is possible to provide the carrier 43 with a function of fixing the stator 31, and so, a separate member or the like for fixing the stator 31 can be omitted, which can contribute to downsizing of the electric assist unit 100.

(7) The wiring 34 connected to the stator 31 is configured to pass through the inside of the carrier 43.

In this configuration, the wiring 34 is allowed to be taken out to the outside by a method such as providing a hollow shaft in the carrier 43 or forming a through hole in a part of the carrier 43. In this case, since a planetary speed reduction mechanism 40a, in which the carrier 43 is fixed, is provided and the carrier 43 does not rotate, it is possible to provide wiring routing such that the wiring 34 is not caught in rotation.

Although the embodiment of the present invention has been described above, the above embodiment is merely a part of application examples of the present invention, and is not intended to limit the technical scope of the present invention to the specific configurations of the above embodiment.

For example, in the above-mentioned embodiment, the electric assist unit 100 is attached to the side of the rear wheel 3b together with the driven sprocket 6b. However, the electric assist unit 100 may be attached to the side of the crankshaft 7c together with the drive sprocket 6a. In this case, it may be possible to employ a configuration in which the pedaling force (the driving torque) transmitted from the crank arms 7b to the crankshaft 7c by the driver pedaling the crank arms 7b via the pedals 7 is input to the sun gear 53. In addition, it may be possible to employ a configuration in which the output of the electric assist unit 100 is transmitted to the drive sprocket 6a via the case 20, is transmitted to the driven sprocket 6b via the chain 6c, which is suspended between the driven sprocket 6b and the drive sprocket 6a, and rotates the rear wheel 3b.

In addition, in the above-mentioned embodiment, the rotor 32 is a so-called inner rotor provided on the inner circumference of the stator 31. Alternatively, a so-called outer rotor in which a stator is provided on an inner circumferential side and a rotor rotates around an outer circumference of the stator may be employed.

### DESCRIPTION OF REFERENCE SIGNS

100: electric assist unit (unit)
8: support shaft (fixed shaft)
20: case (hub)
30: motor
31: stator
32: rotor
34: wiring
40: speed reduction mechanism
40a: planetary speed reduction mechanism
43: carrier
50: transmission mechanism
50a: planetary gear mechanism (gear portion)
59: motive force transmission member (output wall)
61: bearing (first bearing)
62: bearing (second bearing)

## Claims

1. A unit comprising:
a fixed shaft;
a speed reduction mechanism having a portion positioned at an outer circumference of the fixed shaft;
a transmission mechanism having a portion positioned at the outer circumference of the fixed shaft;
a motor having a portion positioned at the outer circumference of the fixed shaft; and
a hub having a portion positioned at an outer circumference of the motor, wherein
the motor is connected to the hub via the speed reduction mechanism,
the transmission mechanism is connected to the hub by bypassing the speed reduction mechanism, and
when viewed from a radial direction, the transmission mechanism has a portion overlapping with the motor.

2. The unit according to claim 1, wherein
when viewed from an axial direction, the speed reduction mechanism has a portion overlapping with the transmission mechanism.

3. The unit according to claim 1, wherein
the transmission mechanism has a gear portion and an output wall connected at a downstream side of the gear portion, and
in the radial direction, the motor is disposed so as to be sandwiched between the output wall and the hub.

4. The unit according to claim 1, wherein
the transmission mechanism has a gear portion and an output wall connected at a downstream side of the gear portion,
the hub is connected at a downstream side of the output wall, and
when viewed from the radial direction, the gear portion has a portion overlapping with the motor.

5. The unit according to claim 1, further comprising:
a first bearing and a second bearing, wherein
the transmission mechanism has a gear portion and an output wall connected at a downstream side of the gear portion,
the first bearing is disposed between the output wall and the fixed shaft, and
the second bearing is disposed between the output wall and the motor.

6. The unit according to claim 1, wherein
the speed reduction mechanism is configured to include a planetary speed reduction mechanism,
a carrier of the planetary speed reduction mechanism is fixed to the fixed shaft, and
a stator of the motor is supported by the carrier.

7. The unit according to claim 6, wherein
wiring connected to the stator is configured to pass through inside of the carrier.
